# FASCICULE DE BREVET EUROPEEN

(11) **EP 2 377 100 B1**
(45) Date de publication et mention de la délivrance du brevet: **01.05.2013**
(21) Numéro de dépôt: 10702523.1
(22) Date de dépôt: 13.01.2010
(51) Int. Cl.: H01Q 1/32, G07B 15/06

(54) **SYSTEME D'IDENTIFICATION POUR COLLECTER DES DONNEES PROVENANT D'AU MOINS UN VEHICULE**
IDENTIFIZIERUNGSSYSTEM FÜR DIE DATENSAMMLUNG VON MINDESTENS EINEM FAHRZEUG
IDENTIFICATION SYSTEM FOR COLLECTING DATA FROM AT LEAST ONE VEHICLE

(30) Priorité: 13.01.2009 FR 0900130; 11.05.2009 FR 0902247
(43) Date de publication de la demande: 19.10.2011
(73) Titulaire: Multitoll Solutions, 92600 Asnières (FR)
(72) Inventeur: DEFAY, Christian, F-74290 Bluffy (FR)
(74) Mandataire: Pichat, Thierry
(86) Numéro de dépôt international: PCT/FR2010/000025
(87) Numéro de publication internationale: WO 2010/081963

(56) Documents cités:
- EP-A- 1 120 316
- WO-A-00/16564
- WO-A-91/08557
- WO-A-2008/079902
- US-A- 5 192 954
- US-A1- 2002 021 228
- US-A1- 2002 101 385

## Description

### DOMAINE TECHNIQUE DE L'INVENTION

L'invention se rapporte à un système d'identification de véhicules par des signaux radiofréquences.

La présente invention concerne le domaine technique de l'identification de véhicules lors de leur passage dans des zones de contrôle. Plus particulièrement, la présente invention concerne les systèmes d'identification de véhicules automobiles tels que ceux utilisés sur les péages autoroutiers, les tunnels, les ponts, les péages urbains, les péages de parkings, les systèmes de gestion de trafic et de mesure de temps de parcours, le contrôle d'accès, la détection des véhicules volés, la détection de fausses plaques d'immatriculation, l'identification électronique des véhicules prévue par la norme 15 024534 afin de déterminer l'identité des véhicules.

### ETAT DE LA TECHNIQUE ANTERIEURE

Il est connu de la technique des systèmes composés d'antennes réceptrices montées sur des structures métalliques à plusieurs mètres de hauteur et surplombant la route. Les voitures sont équipées d'un badge d'identification généralement positionné sur le pare-brise de la voiture et renfermant un émetteur radiofréquence ainsi qu'une électronique de communication permettant de dialoguer avec l'antenne positionnée sur les structures métalliques tel que décrit dans le document US 2002/021228. Ces systèmes utilisent soit des normes de communication selon la norme DSRC utilisant la bande de fréquence 5,8 ou 5,9 GHz ou des normes de communication de type RFID dans la bande de fréquence 860MHz à 960 MHz. En outre, il est fréquent que ces systèmes soient couplés à des caméras de lecture des plaques d'immatriculation permettant d'identifier les usagers ne portant pas de badge d'identification.

L'inconvénient des systèmes d'identification actuellement proposés sur le marché réside dans la contrainte de placer les antennes sur des mats ou des portiques surplombant les voies de circulation pour viser les badges placés sur les pare-brise des véhicules à identifier. Les antennes aériennes placées sur des portiques, actuellement utilisées, ne permettent pas de lire des badges placés en tout point de la face avant ou face arrière des véhicules et notamment sur les plaque d'immatriculation, calandre, capot, etc. Deux technologies se concurrencent, la technologie RFID et la technologie DSRC. La technologie RFID ne nécessite pas d'alimentation des badges par une batterie, par contre la technologie DSRC nécessite une batterie qui limite la durée de vie des badges. Par ailleurs, les structures métalliques maintenant ces antennes réceptrices sont généralement surmontées d'une rampe d'accès pour faciliter la maintenance du système. Ces structures métalliques présentent l'inconvénient d'augmenter de façon significative le coût de ces systèmes sans pouvoir lire les badges en tout point de face ou d'arrière du véhicule.

Il est également connu de l'état de la technique le document EP 1 903 531 décrivant un premier mode de réalisation d'un système d'identification qui n'assure pas une fiabilité de détection suffisante du fait d'un manque de puissance.

Les brevets et demandes US 2002/021228, WO 91/08557, WO 2008/079902, EP 1 120 316, US 5,192,954, GB 1 462 055 et WO 2008/035721 décrivent d'autres modes de réalisation de systèmes de détection.

Ainsi les demandes WO91/08557 et US2002/0101385 décrivent une antenne intégrée dans la chaussée permettant de communiquer avec un répondeur transporté par un véhicule se déplaçant le long d'une chaussée à voies multiples. Le brevet US5192954 décrit un module d'émission/réception enfermé dans un caisson placé dans la voie de circulation.

### EXPOSE DE L'INVENTION

La présente invention vise à pallier les inconvénients de l'état de la technique en réalisant un système d'identification de véhicules qui soit économique par la suppression de l'usage de portiques, tout en assurant une fiabilité de détection optimum des badges d'identification placés sur tout point de la face avant ou de la face arrière du véhicule.

Pour ce faire l'invention prévoit un positionnement particulier du module d'émission et de réception pour la collecte de données d'identification des véhicules ainsi qu'un lobe directif couvrant l'espace d'approche du véhicule à identifier.

À ce titre, l'invention concerne un système d'identification pour collecter des données provenant d'au moins un véhicule en approche se déplaçant sur une voie de circulation présentant une couche de surface ; le système d'identification comportant :
- au moins un badge d'identification radio fréquence, positionné en tout point situé à l'avant ou à l'arrière du véhicule,
- au moins un module d'émission et de réception apte à communiquer avec le badge d'identification par liaison radio pour collecter au moins une donnée d'identification, ledit module étant intégré dans la voie de circulation de façon à lire ledit badge d'identification et
- un boîtier de contrôle relié au module d'émission et de réception pour recevoir et analyser les données d'identification provenant du véhicule,
caractérisé en ce que le module d'émission et de réception est enfermé dans un caisson et en ce que ledit module comprend au moins un plan incliné formant réflecteur et au moins un guide d'ondes.

Le système d'identification, avec son badge solidaire du véhicule assure l'unicité de l'identité du véhicule et sa correspondance avec les informations enregistrées dans la mémoire du badge d'identification. Le véhicule est identifié de façon univoque grâce au badge. En effet, dès la détection du badge, le badge étant unique et lié à un véhicule, le système central peut savoir si le véhicule est autorisé à emprunter la voie de circulation ou s'il est ou doit être déclaré sur une liste d'exception.

Selon une caractéristique avantageuse, ledit caisson comporte au moins une cavité ou fente permettant la propagation des ondes en direction du véhicule en approche et d'une antenne constituée d'une ou plusieurs sources rayonnantes, lesdites fentes étant obturées de manière hermétique.

De préférence, le caisson est positionné en milieu de voie et dans la chaussée de façon à affleurer la couche de surface de la route sur laquelle roulent en approche.

Avantageusement, le badge d'identification comporte un espace mémoire en lecture seule comportant un numéro d'identification unique.

De préférence, ledit caisson est réalisé avec une étanchéité et une rigidité telles qu'il peut supporter une pression supérieure à 3 tonnes. Le caisson sera, par exemple, réalisé en métal.

Le module d'émission et de réception comporte une antenne positionnée, le cas échéant, entre deux substrats. L'utilisation de deux substrats recouvrant l'antenne permet de la protéger lorsque le module d'émission et de réception est enterré dans le sol. En outre, la conception de l'antenne tient compte de la matière du matériau la recouvrant, de ses caractéristiques diélectriques et d'atténuation de l'onde radioélectrique, afin d'assurer d'une part l'accord parfait radioélectrique et d'autre part la puissance émise.

De préférence, l'antenne est formée de sources hyperfréquences placées dans le caisson en affleurement de la chaussée et dont la forme et la structure propagent les ondes dans la direction souhaitée.

Avantageusement, le boîtier de contrôle est positionné à l'extérieur de la zone de circulation et relié au module d'émission et de réception par le biais d'un câble coaxial protégé par un fourreau.

De préférence, le module d'émission et de réception comporte une antenne d'activation et une antenne de réception, l'antenne d'activation étant apte à émettre un signal d'activation d'un transpondeur d'identification radiofréquence, et l'antenne de réception étant apte à collecter au moins une donnée d'information provenant du transpondeur d'identification radiofréquence. L'invention décrit des antennes capables de lire des badges en tout point de la face avant ou de la face arrière des véhicule, la difficulté technique a été de réaliser des antennes placées au sol capable de lire aussi bien des badges sur les pare-brise que sur la calandre ou les plaques d'immatriculations et pouvant résister aux passages des véhicules.

L'utilisation d'une première antenne pour l'émission du signal d'activation et d'une deuxième antenne pour la réception permet de contrôler leur caractéristiques du système afin d'obtenir des gains et des diagrammes de rayonnement identique ou différents selon les caractéristiques du site. En outre, cette réalisation permet d'augmenter considérablement l'efficacité de la transmission du signal provenant du badge d'identification. La séparation en deux antennes permet de concevoir une antenne d'émission différente ayant un gain plus faible, le niveau émis est compensé par le niveau de module d'émission du lecteur ou module radio fréquence. Le signal émis par le badge est reçu par l'antenne de réception. Ce signal est très faible, il est important qu'il soit amplifié immédiatement au niveau de l'antenne pour assurer un rapport signal sur bruit élevé avant tout traitement électronique, cette fonction est assurée par le gain plus élevé de l'antenne de réception. Cette séparation des antennes permet également de concevoir l'antenne de réception pour avoir un diagramme de rayonnement se rapprochant le plus possible du diagramme de rayonnement du badge.

Avantageusement, le module d'émission et de réception comporte un premier module d'antenne et un deuxième module d'antenne de sorte à permettre la communication du module d'émission et de réception avec deux badges d'identification positionnés respectivement à l'avant et à l'arrière du véhicule.

Selon un mode de réalisation avantageux, la zone de circulation présente une direction de déplacement et est composée d'au moins une première et une deuxième voie de circulation, le système d'identification comportant un premier et un deuxième module d'émission positionnés respectivement sur la première et la deuxième voie de circulation, le premier module d'émission et de réception étant apte à communiquer avec le badge d'identification de véhicules se déplaçant sur la première voie de circulation et le deuxième module d'émission et de réception étant apte à communiquer avec le badge d'identification de véhicules se déplaçant sur la deuxième voie de circulation, dans lequel le deuxième module d'émission et de réception est décalée vis-à-vis du premier module d'émission et de réception dans le sens de déplacement de la zone de circulation. Les systèmes connus ne peuvent discriminer des véhicules qui se doublent ou qui sont positionnés entre deux voies de circulation car ils utilisent des antennes dont le lobe est de la dimension d'une voie. Dans notre invention, nos antennes ont un lobe plus large qu'une voie et les antennes sur chaque voie étant décalées d'une dizaine de mètre, le système peut détecter des véhicules qui roulent entre les voies ou qui se doublent.

Avantageusement, le badge d'identification émet dans une bande de fréquence de 860 à 960 MHz. Les ondes hyperfréquences dans la bande 860 MHz - 960 MHz sont faiblement perturbées par les contraintes d'environnement. La conception des antennes et des badges tient compte des contraintes d'environnement.

Le badge d'identification peut être composé d'un transpondeur d'identification radiofréquence, d'un réflecteur métallique et d'une couche diélectrique, la couche diélectrique formant une couche d'espacement entre le transpondeur radiofréquence et le réflecteur métallique.

Avantageusement, la couche diélectrique présente une épaisseur sensiblement inférieure ou égale à 1 centimètre.

La réalisation du badge d'identification sur la plaque d'immatriculation et à partir d'un transpondeur espacé du réflecteur par le biais d'une couche diélectrique permet d'utiliser les dimensions de la plaque d'immatriculation comme réflecteur. La conception de l'antenne utilise cette plaque pour accorder l'antenne à la fréquence utilisée. Cette fonction est assurée par le calcul précis de la distance entre l'antenne du badge et la plaque métallique. La conception de l'antenne permet de compenser la perte de l'onde radioélectrique lors de son passage à travers le matériau, tout en restant en dessous des niveaux de puissance d'émission autorisés par les normes internationales.

Le badge d'identification radiofréquence peut être protégé par un boîtier de protection apte à détruire le transpondeur d'identification radiofréquence en cas d'arrachement.

La norme RFID, puce à lecture seule, se prête facilement à ce nouveau concept, en effet le système d'antenne intégré dans la route active la puce du véhicule, la puce répondant en donnant son identifiant unique. Le système fonctionnant en lecture seule il ne peut pas présenter de risques d'erreur en écriture ou de tentative de fraude en écrivant des informations erronées dans le badge. De plus les données du badge sont cryptées afin d'éviter la lecture par des personnes non autorisées, et authentifiées afin de garantir l'exactitude des données. De plus, la vitesse en lecture seule du badge est très rapide. Les applications d'un tel dispositif sont nombreuses, elles recouvrent les péages autoroutiers, tunnels, ponts, les péages urbains, les péages de parkings, la gestion de trafic et de mesure de temps de parcours, l'identification au sens large des véhicules, permettant entre autre d'identifier les véhicules volés.

Un autre mode de réalisation de l'invention utilisant la norme DSRC permet de communiquer dans une bande de fréquences allant de 5,8 GHz à 5,9 GHz, le module d'émission et de réception est incorporé dans un caisson, le caisson étant encastré en surface de la voie de circulation. Il est ainsi possible de transférer les données d'identification par le biais d'ondes radio sans interférence avec les couches de bitume formant la voie de circulation. Ainsi la transmission des signaux présentant des fréquences comprises entre 5,8 ou 5,9 GHz est favorisée:

Avantageusement, le caisson comporte une surface supérieure présentant au moins une cavité ou fente. Cette fente étant obstruée par une résine empêchant l'eau ou l'humidité de s'infiltrer dans les sources hyperfréquences.

De préférence, le caisson incorpore au moins une source rayonnante apte à émettre des ondes radio et le plan incliné est apte à réfléchir les ondes radio provenant de la source rayonnante en directions des fentes. La fente et l'utilisation combinée d'un plan ou plaque inclinée réfléchissante permet de favoriser la transmission de l'onde radio vers le badge d'identification.

Avantageusement, la fente, la source rayonnante et le plan incliné sont agencées de sorte que la distance susceptible d'être parcourue par une onde radio depuis la source rayonnante et jusqu'à la fente, après réflexion sur le plan incliné, est un multiple de λ/4, λ représentant la longueur d'onde de l'onde radio.

De préférence, la fente, la source rayonnante et le plan incliné sont agencés de sorte à former un lobe d'émission incliné de 10 à 30 degrés par rapport à la surface supérieure de la voie de circulation.

Selon un autre mode de réalisation, permettant de communiquer dans une bande de fréquence allant de 860 MHz à 960 MHz, le caisson incorpore un élément de support, une pluralité de modules élémentaires métalliques et une pluralité de sources rayonnantes aptes à émettre des ondes radio, les modules élémentaires étant régulièrement répartis sur l'élément de support de sorte à assurer une transmission des ondes radio homogène.

Avantageusement, l'élément de support, les modules élémentaires et les sources rayonnantes sont agencés de sorte à former un lobe d'émission incliné de 10 à 30 degrés par rapport à la surface supérieure de la voie de circulation. Ce lobe couvre plus de 10m de distance de lecture et présente une largeur de lecture de 4m couvrant ainsi plus de la largeur d'une voie de circulation.

### BREVE DESCRIPTION DES FIGURES

D'autres caractéristiques et avantages de l'invention ressortiront à la lecture qui suit d'un exemple de réalisation détaillé, en référence aux figures annexées qui représentent respectivement :
- la figure 1, une représentation schématique d'un exemple de réalisation du système d'identification selon l'invention ;
- les figure 2a et 2b sont des représentations schématiques de deux modes de réalisation d'une voie de circulation comportant un module d'émission et de réception appartenant au système d'identification de la figure 1 ;
- la figure 3, une représentation schématique d'un premier mode de réalisation d'un module d'émission et de réception appartenant au système d'identification de la figure 1 ;
- les figures 4a et 4b, deux représentations schématiques de vues dans les plans horizontal et vertical d'un deuxième mode de réalisation d'un module d'émission et de réception appartenant au système d'identification de la figure 1 ;
- la figure 5, une représentation schématique d'un troisième mode de réalisation d'un module d'émission et de réception appartenant au système d'identification de la figure 1 ;
- la figure 6, une représentation schématique d'un quatrième mode de réalisation d'un module d'émission et de réception appartenant au système d'identification de la figure 1 ;
- la figure 7, une représentation schématique d'un système d'identification comportant deux modules d'émission et de réception positionnés sur deux voies de circulation adjacentes ;
- la figure 8, une représentation schématique d'un premier mode de réalisation d'un badge d'identification appartenant au système d'identification selon l'invention ;
- la figure 9, une représentation schématique d'un deuxième mode de réalisation d'un badge d'identification appartenant au système d'identification selon l'invention ;
- la figure 10, une représentation schématique d'un deuxième exemple de réalisation du système d'identification selon l'invention ;
- les figures 11 a et 11 b sont deux représentations schématiques en vue de dessus et en vue de coupe du lobe de lecture de l'antenne selon la variante du système de la figure 1
- les figures 12a, 12b et 12c, trois représentations schématiques en perspective, en vue de dessus et en vue de coupe selon la coupe A-A d'un premier mode de réalisation d'un module d'émission et de réception appartenant au système d'identification de la figure 1 ;
- les figures 13a et 13b, deux représentations schématiques, en perspective et en vue de dessus, d'un deuxième mode de réalisation d'un module d'émission et de réception appartenant au système d'identification de la figure 1 ;
- les figures 14a et 14b, deux représentations schématiques en perspective vues de dessus avant et arrière d'un troisième mode de réalisation d'un module d'émission et de réception appartenant au système d'identification de la figure 1.

### DESCRIPTION DETAILLEE D'UN MODE DE REALISATION

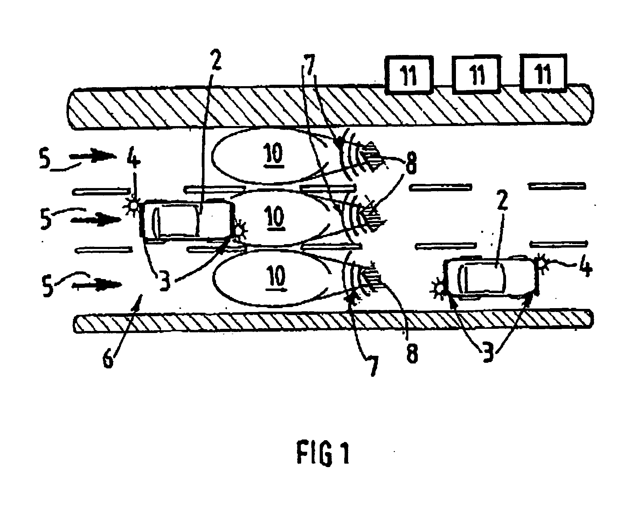

La figure 1 représente une vue schématique d'un exemple de réalisation du système d'identification selon l'invention appliqué aux véhicules automobiles.

dans cet exemple de réalisation, les véhicules 2 sont dotés de deux badges d'identification 3 positionnés à l'avant et à l'arrière. Ces badges d'indentification 3 comportent plus particulièrement un transpondeur d'identification radio fréquence 4. Ces véhicules 2 se déplacent sur l'une des trois voies 5 adjacentes de la zone de circulation 6. Ces voies 5 présentent généralement une largeur comprise entre 3 et 3,5 mètres. Chacune de ces trois voies 5 doit pouvoir détecter le passage d'un véhicule 2 par la lecture du badge d'identification 3 avant et/ou arrière.

À ce titre, chacune des voies de circulation 5 comporte un lecteur d'identification radiofréquence 7 formé par un module d'émission et de réception 8 placé dans la voie de circulation et éventuellement associé à un boîtier de contrôle (non représenté en figure 1) placé le long de la chaussée.

Ces lecteurs d'identification radiofréquence 7 sont enfouis dans la structure des voies de circulation 5. Les modules 8 présentent un lobe d'émission 10 permettant de rechercher la présence d'un transpondeur 4. Lorsque l'un des transpondeurs 4 du véhicule 2 traverse le lobe d'émission 10 du module d'émission et de réception 8, celui-ci démarre une lecture des informations contenues dans ce transpondeur 4. Plus particulièrement, ledit transpondeur 4 comporte un espace mémoire en lecture seule dans lequel est enregistré un numéro d'identification unique permettant d'identifier le véhicule 2. Ce système d'identification permet l'utilisation de tout type de module d'émission et de réception 8 (RFID, DSRC, ou autres).

Le système d'identification représenté sur la figure 1 comporte également des caméras de surveillance 11 pour contrôler les plaques d'immatriculation des véhicules 2 ne possédant pas de badge d'identification 3. Ces caméras de surveillance 11 sont placées le long de la route mais pourraient également être positionnés à des endroits surplombant la zone de circulation 6 tels que les ponts, les tunnels, les mats ou les portiques de signalisation. Les caméras 11 lisent les plaques d'immatriculation de manière continue.

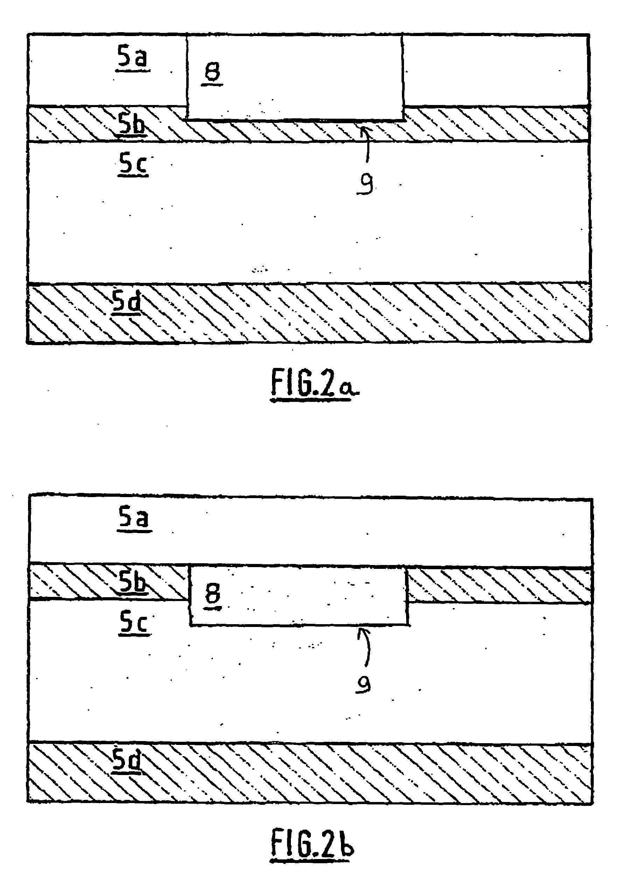

Les figures 2a et 2b représentent une voie de circulation 5 en coupe verticale. Cette voie comporte un empilement de différentes couches et est destinée à contenir un module d'émission et de réception 8 appartenant au système d'identification de la figue 1.

La voie de circulation 5 représentée sur les figures 2a et 2b comporte une première couche de surface 5a d'une épaisseur d'environ 2 à 8 centimètres constituée de 6% de bitume et de 94% de granulat. Sous cette couche de surface 5a, la voie de circulation 5 comporte une couche d'accrochage 5b de 0,5 centimètres, puis une couche de base 5c d'environ 9 centimètres et enfin une couche de cure 5d.

De façon avantageuse, le module 8 comprend un caisson 9 réalisé en métal et enfermant une antenne constituée d'une ou plusieurs sources rayonnantes. La structure hermétique de ce caisson permet de rendre étanche l'antenne, d'obtenir le lobe d'antenne requis et d'assurer la solidité mécanique de l'ensemble. Ce caisson 9 permet au module d'émission et de réception 8 de résister à une pression de plus de 3 tonnes générée par des poids lourds circulant sur les voies. La figure 2a représente le module 8 comprenant le caisson 9 dont la face supérieure affleure la couche de surface 5a de la voie de circulation.

Selon un mode de réalisation alternatif, le module d'émission et de réception 8 peut également être positionné directement sous la couche de surface 5a ou intégré dans une sous couche plus profonde réalisée dans un matériau identique à la couche de surface 5a. La couche de surface 5a représente alors la seule épaisseur de matériau sous laquelle est positionné le module d'émission et de réception 8 sans faire totalement écran à la transmission des ondes. La figure 2b représente le module 8 comprenant le caisson 9 placé sous la couche de surface (5a) de la voie de circulation.

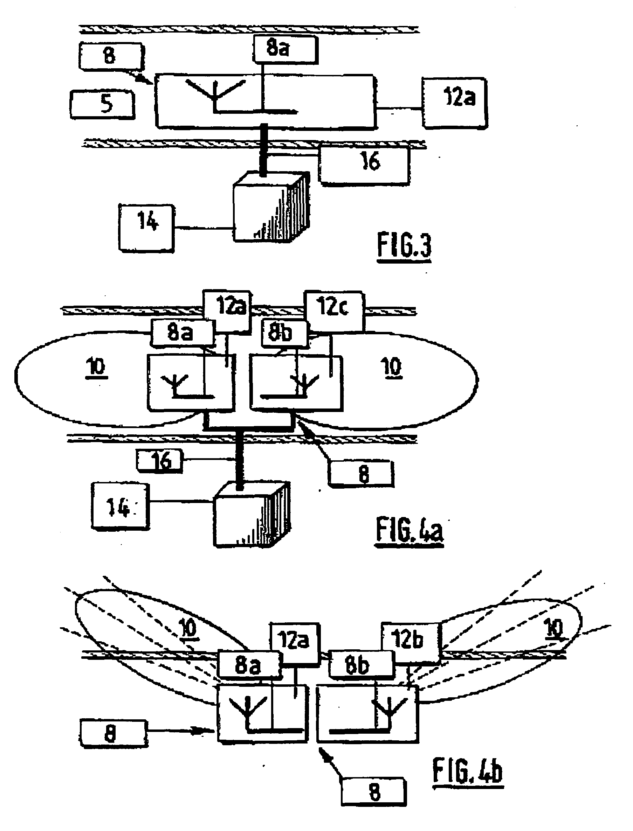

La figure 3 représente un premier mode de réalisation du module d'émission et de réception 8 appartenant au système d'identification de la figure 1.

Selon ce premier mode de réalisation, le module d'émission et de réception 8 est placé au milieu de la voie de circulation 5. Le module d'émission et de réception 8 est également relié à un boîtier de contrôle 14 par un câble 16 coaxial protégé par un fourreau. Ce module d'émission et de réception 8 permet le dialogue entre le transpondeur 4 du véhicule 2 et le boîtier de contrôle 14 malgré les contraintes environnementales de la construction de la voie de circulation 5.

Plus particulièrement, le premier module est apte à émettre un signal d'activation des transpondeurs d'identification radiofréquence 4 ainsi qu'à recevoir les informations émises par ces transpondeurs d'identification radiofréquence 4.

Afin de minimiser les pertes et d'assurer une bonne tenue mécanique, la connexion entre le module d'émission et de réception 8 et le câble 16 est de préférence réalisée par des connecteurs de type N. En outre, Pour des raisons de maintenance, seule la partie passive du module d'identification radio fréquence 7 est placée dans la voie, la partie électronique hyperfréquences étant placée dans le boîtier de contrôle 14 le long de la zone de circulation 6. Ce boîtier de contrôle 14 est en liaison filaire ou non filaire (Radio, GSM, ou autres) avec un système central (non représenté) permettant de corréler les informations obtenues par les lecteurs radiofréquences 7 et par les caméras 11. En cas de non corrélation la plaque photographiée sera placée dans le système de suivi des infractions.

Les figures 4a et 4b représentent deux vues dans le plan horizontal et dans le plan vertical, d'un deuxième mode de réalisation du module d'émission et de réception utilisé dans le système d'identification de la figure 1.

Selon ce mode de réalisation, le module d'émission et de réception 8 comporte un premier module d'antenne 8a ainsi qu'un deuxième module d'antenne 8b monté en tête bêche vis-à-vis du premier module 8a. Le premier module 8a et le deuxième module 8b sont tous les deux aptes à émettre un signal d'activation et à recevoir les informations émises par ces transpondeurs d'identification radiofréquence 4. En outre, le lobe et d'émission et de réception 10 du premier module 8a est positionné vers l'arrière, tandis que le lobe d'émission et de réception 10 du deuxième module 8b est positionné vers l'avant. De ce fait, le premier module 8a permet de réaliser l'activation et la lecture des informations émises par le transpondeurs d'indentification radiofréquence positionné à l'arrière du véhicule, tandis que le deuxième module 8b permet de réaliser l'activation et la lecture des informations émises par le transpondeurs d'indentification radiofréquence 4 positionné à l'arrière du véhicule 2.

Les premier et deuxième modules 8a, 8b peuvent présenter une longueur sensiblement égale à 50 centimètres et une largeur de l'ordre de 50 centimètres.

Comme l'illustre la figure 4a, le premier et le deuxième module d'émission et de réception 8a, 8b permettent de lire des badges avant et arrière d'un véhicule 2 circulant sur une voie de circulation 5, le seuil de détection du véhicule 2 est compris entre 6 et 8 mètres.

Par ailleurs, le lobe 10 des premier et deuxième module 8a, 8b assurent la lecture de transpondeurs 4 disposés à une hauteur de 20 à 180 centimètres par rapport à la chaussée. La hauteur moyenne des transpondeurs 4 est donc de 75 centimètres.

En outre, de façon avantageuse le rayonnement des premier et deuxième modules 8a, 8b dans le plan vertical représente l'alignement des deux lobes 10 avec l'axe de la voie de circulation 5. L'angle d'ouverture du lobe permet d'éviter que le module de d'émission et de réception 8 placé dans une voie de circulation 5 ne détecte un véhicule 2 circulant sur une voie 5 adjacente.

La figure 4b illustre le rayonnement des premier et deuxième module 8a, 8b dans le plan vertical. Les lobes 10 de ces modules présentent une direction orientée à 10° par rapport à la voie.

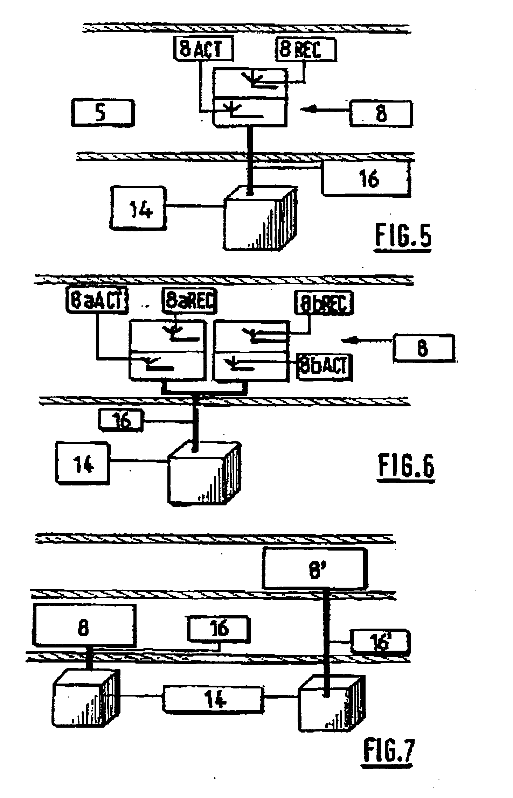

La figure 5 représente un troisième mode de réalisation du module d'émission et de réception 8 appartenant au système d'identification de la figure 1.

Selon ce troisième mode de réalisation, le module d'émission et de réception 8 comporte une antenne d'activation 8_{ACT} permettant de générer un signal d'activation des transpondeurs 4 passant à proximité. Le module d'émission et de réception 8 comporte également une antenne de réception 8_{RÉC} destinée à lire les informations provenant des transpondeurs radiofréquences 4 activés par l'antenne d'activation 8_{ACT}.

La figure 6 représente un quatrième mode de réalisation du module d'émission et de réception 8 du système d'identification de la figure 1.

Selon ce quatrième mode de réalisation, le module d'émission et de réception 8 comporte un premier jeu d'antennes positionnées sur un premier substrat 12a ainsi qu'un deuxième jeu d'antennes positionnées sur un deuxième substrat 12b.

Le premier jeu d'antennes comporte une première antenne d'activation 8a_{ACT} apte à émettre un signal d'activation des transpondeurs d'identification 4 positionnés à l'avant du véhicule 2. Ce premier jeu d'antennes comporte également une première antenne de réception 8a_{RÉC} apte à lire les informations provenant de ces transpondeurs d'identification 4.

De la même façon, le module d'émission et de réception 8 comporte une deuxième antenne d'activation 8b_{ACT} et une deuxième antenne de réception 8b_{RÉC} aptes, respectivement, à activer et lire les informations provenant des transpondeurs d'identification 4 positionnés à l'arrière des véhicules 2.

La figure 7 illustre un système d'identification selon l'invention comportant deux modules d'émission et de réception 8, 8'. Ce mode de réalisation permet de distinguer les véhicules roulant entre 2 voies adjacentes.

Selon ce mode de réalisation, la zone de circulation 6 comprend une première voie 5 et une seconde voie 5'. Chacune de ces voies 5, 5' présente un module d'émission et de réception 8, 8' enfouie dans la voie. Ces modules d'émission et de réception 8, 8' peuvent être réalisés selon l'un des modes de réalisation présenté en référence aux figures 3 à 6. Lesdits modules d'émission et de réception 8, 8' sont alors reliés à un boîtier de contrôle 14 positionné sur le bord de la zone de circulation 6 par le biais de deux câbles 16, 16' coaxiaux protégés par des fourreaux. Toutefois, afin d'améliorer la performance du système et de limiter les interférences entres ces deux modules d'émission et de réception 8, 8', leurs positions sont décalées selon la direction de déplacement des véhicules.

La figure 7 représente un premier mode de réalisation d'un badge d'identification appartenant au système d'identification selon l'invention.

Selon cet exemple de réalisation, le badge d'identification 3 comporte un transpondeur d'identification radiofréquence 4 à lecture seule. L'utilisation de ce transpondeur 4 dans la bande de fréquences UHF (860 - 960 MHz) est avantageuse car, à ces fréquences, l'onde radio est relativement peu atténuée par le bitume ou le béton.

La puissance de ce transpondeur 4 est déterminée de façon à franchir cette couche de matière, bitume ou béton, séparant le badge d'identification 3 du lecteur d'identification radio fréquence 7. En outre, les informations sont émises dans l'air avec une puissance conforme à la norme radio en vigueur.

Le badge d'identification est fixé sur une partie de la plaque d'immatriculation 18 et recouvert d'un sigle normalisé indiquant, par exemple, la nationalité du véhicule 2. Ce badge d'identification 3 comporte un boîtier 20 dans lequel sont disposés successivement une couche métallique très fine, par exemple en aluminium, servant de réflecteur 22, une couche diélectrique 24 et le transpondeur d'identification radiofréquence 4.

La couche diélectrique 24 permet d'espacer le transpondeur d'identification 4 du réflecteur 22. En outre, le transpondeur 4 peut être incliné vers la voie de circulation 5 d'un angle sensiblement compris entre 0° et 10°. Le boîtier 20 est également résistant au choc. En outre, en cas de tentative d'arrachement un système de destruction de la puce du transpondeur 4 est mis en oeuvre.

Selon un premier mode de réalisation, le système de destruction est réalisé par l'arrachement de la connexion entre l'antenne et la puce électronique du transpondeur d'identification 4. Selon un second mode de réalisation, le système de destruction serait chimique par destruction de la puce électronique quand l'enveloppe de la puce se retrouve à l'air libre (réaction chimique thermique par contact avec l'air).

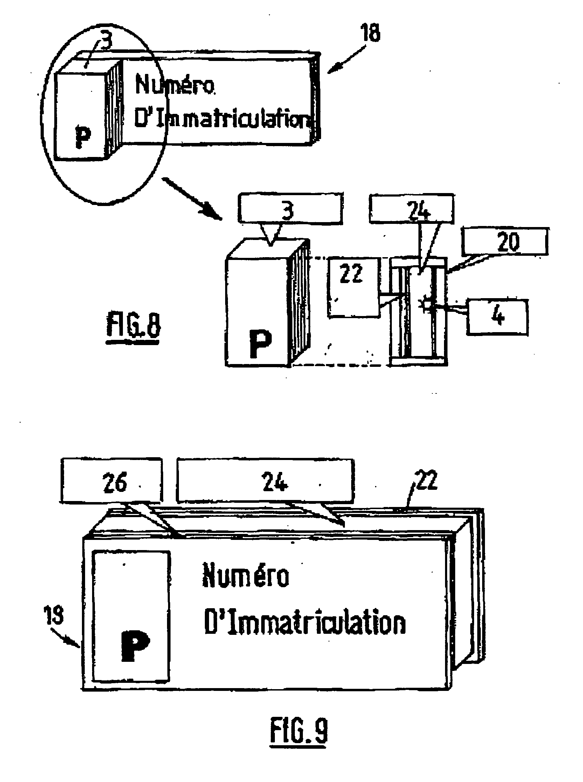

La figure 9 représente un autre mode de réalisation d'une plaque d'immatriculation 18 appartenant au système d'identification selon l'invention.

Selon cet exemple de réalisation, la plaque d'immatriculation 18 intègre un badge d'identification sur la totalité de sa surface. Ainsi, la plaque d'immatriculation 18 est constituée de plusieurs couches superposées et composées d'un support métallique 22, d'une première couche diélectrique 24 présentant sensiblement les même dimensions que le réflecteur 22, d'un transpondeur radiofréquence 4 disposé en surface de la couche diélectrique 24 et d'une seconde couche diélectrique 26 présentant des inscriptions telles que le numéro de la plaque d'immatriculation 18 ou la nationalité du véhicule 2.

De part sa taille, le support métallique 22 agit comme un réflecteur et les antennes bipolaires du transpondeur 4 peuvent se déployer sur une plus grande surface. En outre, la première couche diélectrique présente une épaisseur avantageusement égale à 4 centimètres, ce qui permet d'améliorer le rayonnement de l'antenne du transpondeur 4.

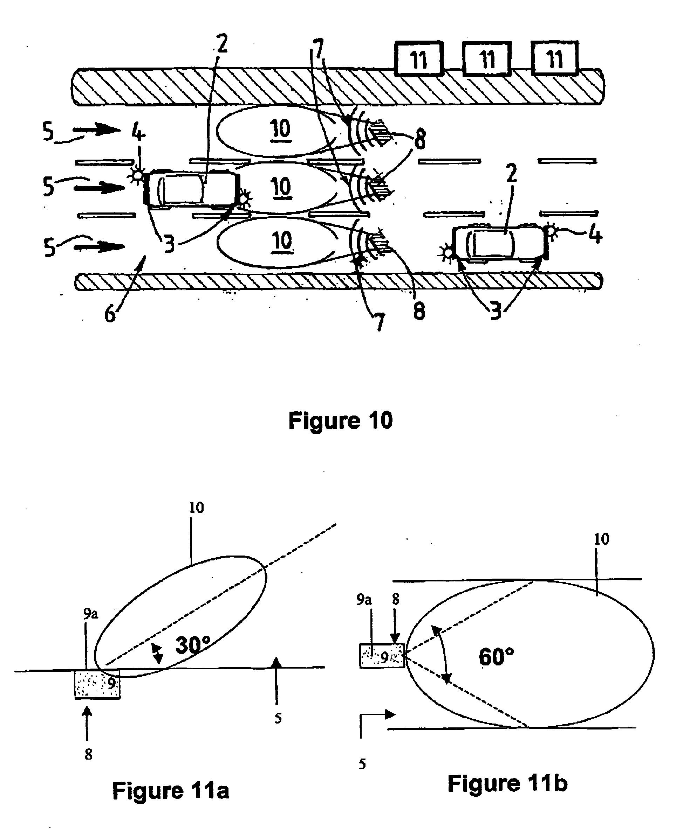

La figure 10 représente une vue schématique d'un deuxième exemple de réalisation du système d'identification selon l'invention appliqué aux véhicules automobiles.

De même que dans l'exemple de réalisation précédent, les véhicules 2 sont dotés de deux badges d'identification 3 positionnés respectivement à l'avant et à l'arrière. Ces badges d'indentification 3 comportent plus particulièrement un transpondeur d'identification radio fréquence 4. Ces véhicules 2 se déplacent sur l'une des trois voies 5 adjacentes de la zone de circulation 6. Ces voies 5 présentent généralement une largeur comprise entre 3 et 3,5 mètres. Chacune de ces trois voies 5 doit pouvoir détecter le passage d'un véhicule 2 par la lecture du badge d'identification 3 transmettant des ondes radio. La lecture de ces ondes radio se fait par le biais d'un lecteur d'identification radiofréquence 7 positionné dans la voie de circulation 5 et formé par un module d'émission et de réception 8 associé à un boîtier de contrôle (non représenté en figure 10).

Les figures 11a et 11b représentent respectivement une vue en coupe et une vue de dessus d'une voie de circulation 5 comportant un empilement de différentes couches et contenant un module d'émission et de réception 8 appartenant au système d'identification de la figure 1.

De façon avantageuse, ce module d'émission et de réception 8 est enrobé dans la chaussée en étant intégré dans un caisson 9 de forme parallélépipédique, présentant une longueur de 150 mm, une largeur de 40 mm et une épaisseur de 50 mm. La longueur du caisson 9 s'étend selon la direction de déplacement des véhicules 4 et, par conséquent, la largeur du caisson 9 s'étend selon une direction perpendiculaire à la direction de déplacement des véhicules. D'autre part, ce caisson 9 est avantageusement réalisé en acier inoxydable et permet au module d'émission et de réception 8 de résister à la pression des roues des véhicules s'exerçant sur la face supérieure du caisson.

Comme l'illustre les figures 11a et 11b, le module d'émission et de réception 8 est encastré en surface de la voie de circulation 5. Ainsi, ce caisson 9 présente une face supérieure 9a positionnée sensiblement dans le même plan que la surface de la chaussée formant la voie de circulation 5. De ce fait, les ondes radio qui sont normalement atténuées par les couches de bitume peuvent, selon ce mode de réalisation, être reçues en visée directe et sans obstacle par le badge d'identification 3.

Le module d'émission et de réception 8 présente un lobe d'émission et de réception 10 présentant un angle d'ouverture de 60 degrés dans le plan supérieur de la voie de circulation 5 et réalisant un angle de 10 à 30 degrés par rapport au plan supérieur de cette voie de circulation 5.

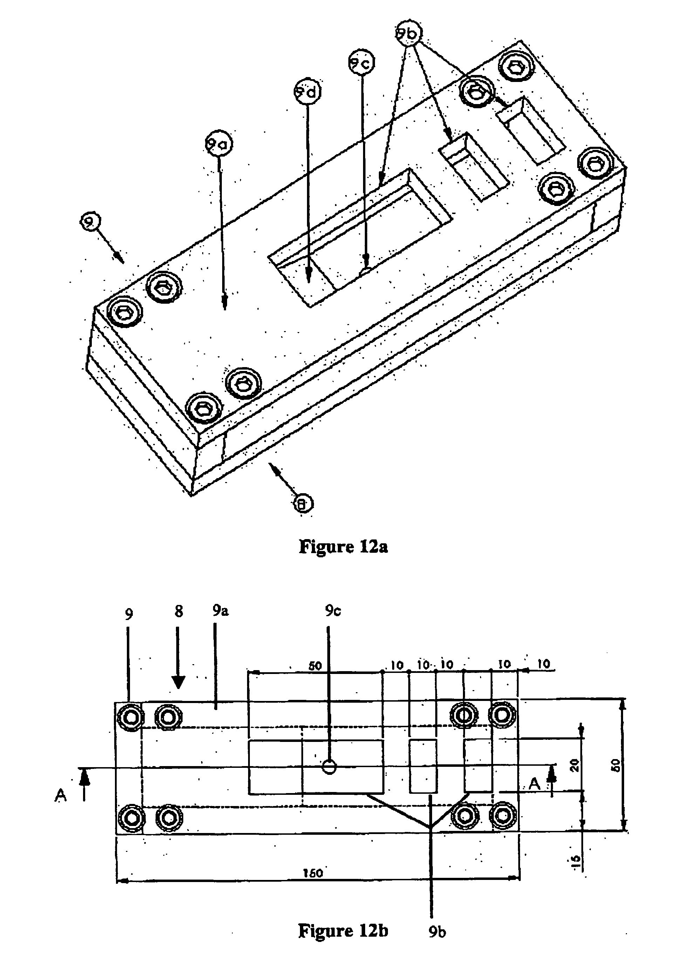

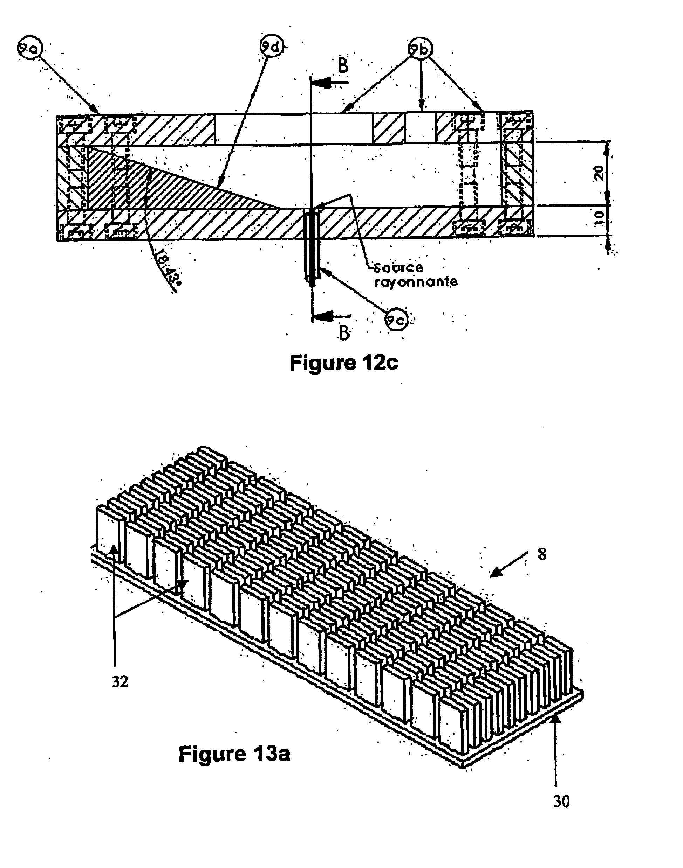

Les figures 12a, 12b et 12c représentent respectivement une vue en perspective, une vue de dessus et une vue en coupe d'un premier mode de réalisation du module d'émission et de réception 8 de la figure 10.

Selon ce mode de réalisation, le module d'émission et de réception 8 est apte à recevoir des ondes radio émises dans la bande de fréquence 5,8 GHz à 5,9 GHz selon le protocole de communication de la norme DSRC.

Pour ce faire, la surface supérieure 9a du caisson 9 comporte trois cavités ou fentes 9b centrées vis-à-vis de la largeur du caisson 9. À l'intérieur du caisson 9 est disposée une source rayonnante 9c pouvant être réalisée alternativement par un dipôle ou par un monopole replié rayonnant. Face à cette source rayonnante 9c se trouve une plaque inclinée 9d apte à réfléchir les ondes provenant de la source rayonnante 9c en directions des fentes 9b. En outre, la position de la source rayonnante 9c par rapport à la plaque inclinée 9d est ajustée de sorte à obtenir l'homogénéité de l'onde radio dans le lobe d'émission 10. La qualité de la communication de cette onde radio est ainsi assurée.

De façon avantageuse le volume intérieur du caisson 9 est rempli d'une résine ou d'une substance à faible coefficient diélectrique (le plus proche de 1), permettant ainsi d'éviter la pénétration de poussières ou d'eau de ruissellement (pluies).

De même que précédemment, ce premier mode de réalisation du module d'émission et de réception 8 peut comprendre une première source rayonnante 9c permettant de générer un signal d'activation des transpondeurs 4 passant à proximité et une deuxième source rayonnante 9c destinée à lire les informations provenant des transpondeurs radiofréquences 4 activés par la première source rayonnante 9c.

En outre, le module d'émission et de réception 8 peut également prévoir plusieurs jeux de sources rayonnantes présentant chacun une source rayonnante d'activation des badges d'identifications 4 et une source rayonnante de réception des informations provenant de ces badges d'identifications 4.

Avantageusement, les distances susceptibles d'être parcourues par les ondes radio depuis la source rayonnante 9c et jusqu'aux différentes fentes 9b, après réflexion sont des multiples de λ/4, λ représentant la longueur d'onde du signal radio.

L'un des principaux avantages techniques apportés par la caractéristique d'une conception d'antenne tout en métal est la solidité mécanique permettant de supporter la pression des pneus des véhicules lourds, à titre d'exemple la pression peut atteindre plus de 3 tonnes sur une surface de 20 x 20 cm2.

Selon un exemple de réalisation non limitatif, la plaque 9d est inclinée d'un angle sensiblement égal 18 degrés par rapport au plan supérieur de la voie de circulation 5. Par ailleurs, une première fente 9b présente la forme d'un rectangle de 20 mm dans le sens de la largeur et de 50 mm dans le sens de la longueur. Cette première fente 9b est décalée de 50mm par rapport à l'une des extrémités du caisson 9. Les deux autres fentes 9b présentent des dimensions identiques, à savoir 20 mm dans le sens de la largeur et 10 mm dans le sens de la longueur et sont espacées entre elles de 10 mm. La dernière fente est positionnée à 10 mm de l'autre extrémité du caisson 9. Selon des modes de réalisation alternatif, les fentes pourraient également être positionnées différemment, mais de préférence en s'étirant selon une direction perpendiculaire à la direction de déplacement des véhicules afin de favoriser la transmission des ondes radio vers les badges d'identification 3 et vice-versa.

La mécanique ainsi montée permet aux ondes directes et réfléchies passant à travers les trois fentes 9b d'assurer un lobe de transmission inclinée de 30 degrés par rapport à l'horizontal avec un angle d'ouverture d'environ 60°.

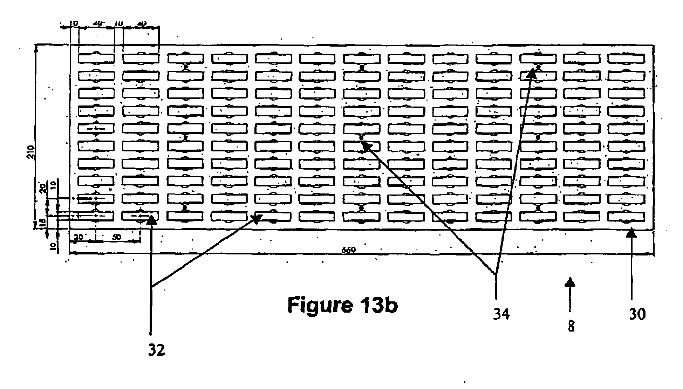

Les figures 13a, 13b représentent un deuxième mode de réalisation d'un module d'émission et de réception 8 appartenant au système d'identification de la figure 10.

Ce deuxième mode de réalisation du module d'émission et de réception 8 permet de détecter le passage d'un badge d'identification 3 transmettant des ondes radio dans la bande de fréquences 860-960Mhz, selon le protocole de communication RFID.

Ce module d'émission et de réception 8 est également constitué d'un caisson (non représenté sur les figures 13a, 13b) comportant une surface supérieure positionnée sensiblement dans le même plan que la surface supérieure de la voie de circulation 5. De ce fait, les ondes radio sont reçues en visée directe.

Ce module d'émission et de réception 8 est totalement métallique et basé sur la combinaison de deux principes de base du FSS (« Frequency Selective Surface ») et du Matériaux Périodiques Répétitifs.

C'est un ensemble de dimensions sensiblement égales à 660mm de long, 210mm de large et 76mm de haut comportant un assemblage répétitif de 130 modules de base 30 de dimensions sensiblement égales à 40mm de large, 66mm de long et 10mm d'épaisseur monté sur un plaque métallique 32 servant de plaque support. Les modules de base 30 sont montés espacés de 10mm les uns des autres dans les deux directions.

Le module d'émission et de réception 8 comporte également un ensemble de 3 rangées de dipôles 34, chaque rangée se compose de 3 dipôles 34 assurant un rayonnement homogène et apte fournir un rayonnement de 10 à 30° par rapport à la plaque support et d'angle ouverture de 60°. Les rangées sont espacées d'une distance sensiblement égale à 160 mm et sur chaque rangée les dipôles 34 sont espacés d'une distance sensiblement égale à 80mm. La première rangée de dipôles est placée à une distance sensiblement égale à 130mm du bord de la plaque support dans le sens de la longueur et centrée dans le sens de largeur par rapport à la plaque support.

Le principe de cette réalisation pourrait être étendu au DSRC de 5,8 à 5,9Ghz, les dimensions des différents modules constituants seront réduites et dimensionnés pour ces fréquences.

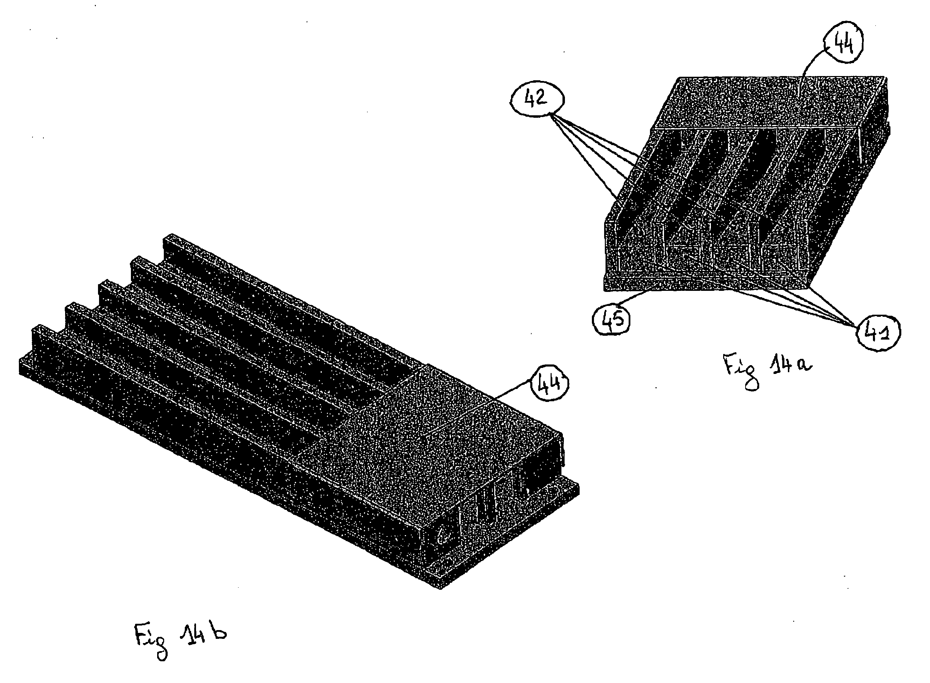

Les figures 14a et 14b représentent respectivement en perspective vues de dessus face et arrière d'un troisième mode de réalisation du module d'émission et de réception 8 de la figure 10.

Selon ce mode de réalisation, le module d'émission et de réception 8 est apte à recevoir des ondes radio émises dans la bande de fréquence 5,8 GHz à 5,9 GHz selon le protocole de communication DSRC.

Pour ce faire, la surface supérieure caisson 45 comporte quatre fentes 42 sur la largeur du caisson 45. À l'intérieur du caisson 45 sont disposées des sources rayonnantes dans l'emplacement recouvert d'un couvercle 44. Face à cette source rayonnante 44 se trouve une plaque inclinée 41 apte à réfléchir les ondes provenant des sources rayonnantes 44 en direction des fentes 42 qui servent de guides d'ondes.

De façon avantageuse le volume intérieur des guides d'ondes 42 est rempli d'une résine de coefficient diélectrique 3, permettant ainsi d'éviter la pénétration de poussières ou d'eau de pluie.

Selon ce mode de réalisation, le module d'émission et de réception 8 est recouvert d'un capot 43 protégeant les sources de l'humidité et de la pluie en formant un coffret étanche avec le caisson 45.

L'un des principaux avantages techniques apportés par la caractéristique d'une conception d'antenne tout en métal est la solidité mécanique permettant de supporter la pression des roues des véhicules lourds qui, à titre d'exemple, peut atteindre plus de 3 tonnes sur une surface de 20 x 20 cm2.

Selon un exemple de réalisation non limitatif, la plaque 41 est inclinée d'un angle sensiblement égal 10 degrés par rapport au plan supérieur de la voie de circulation 5. Les guides d'ondes présentent une hauteur de 4 cm pour une longueur de 30 cm et une épaisseur de 1 cm.

La mécanique ainsi montée permet aux ondes directes et réfléchies passant à travers les quatre fentes 42 d'assurer un lobe de transmission inclinée de 10 degrés par rapport à l'horizontal avec un angle d'ouverture d'environ 60°.

L'invention n'est pas limitée aux exemples de réalisation décrits et représentés. Il est également possible de prévoir un tel système d'identification pour tout autre type de fréquences radioélectriques. En outre, un tel système pourrait éventuellement s'étendre à des badges d'identification 3 présentant des transpondeurs 4 actifs, avec alimentation autonome, de sorte à autoriser les opérations de lecture et d'écriture d'informations délivrées par le système central à des vitesses beaucoup plus élevée.

Par ailleurs, il est à noter que le système selon l'invention est apte à lire les badges positionnés tant sur la plaque d'immatriculation que sur la calandre ou sur le pare brise d'une automobile ou bien être installé sur le pare choc ou dans toute autre position à l'avant du véhicule.

## Revendications

1. Système d'identification pour collecter des données provenant d'au moins un véhicule (2) en approche se déplaçant sur une voie de circulation (5) présentant une couche de surface (5a) ; le système d'identification comportant:
- au moins un badge d'identification (3) radio fréquence, positionné en tout point situé à l'avant ou à l'arrière du véhicule,
- au moins un module d'émission et de réception (8, 8') apte à communiquer avec le badge d'identification (3) par liaison radio pour collecter au moins une donnée d'identification, ledit module étant intégré dans la vole de circulation (5) de façon à lire ledit badge d'identification, et
- un boîtier de contrôle (14) relié au module d'émission et de réception (8, 8') pour recevoir et analyser les données d'identification provenant du véhicule (2),
**caractérisé en ce que** le module d'émission et de réception (8, 8') est enfermé dans un caisson (9) et **en ce que** ledit module comprend au moins un plan incliné (9d, 41) formant réflecteur et au moins un guide d'ondes.

2. Système d'identification selon la revendication 1, **caractérisé en ce que** ledit caisson (9) comporte au moins une fente (9b, 42) permettant la propagation des ondes en direction du véhicule en approche et d'une antenne (8a, 9c, 44) constituée d'une ou plusieurs sources rayonnantes, ladite au moins une fente (9b, 42) étant obturée de manière hermétique.

3. Système d'identification selon la revendication précédente, **caractérisé en ce que**, le caisson (9) incorpore au moins une source rayonnante (9c, 34) apte à émettre des ondes radio et **en ce que** ledit plan incliné (9d) est apte à réfléchir les ondes radio provenant de ladite source rayonnante en direction de ladite au moins une fente (9b, 42).

4. Système d'identification selon la revendication 3, **caractérisé en ce que** la fente (9b), la source rayonnante (9c) et le plan incliné (9d) sont agencés de sorte que la distance susceptible d'être parcourue par une onde radio depuis la source rayonnante (9c) et jusqu'à la fente (9b), après réflexion sur la plaque inclinée (9d), est un multiple de λ/4, λ représentant la longueur d'onde de l'onde radio.

5. Système d'identification selon la revendication 3 ou 4, **caractérisé en ce que** la fente (9b), la source rayonnante (9c) et le plan incliné (9d) sont agencés de sorte à former un lobe d'émission incliné entre 10 et 30 degrés par rapport à la surface supérieure de la voie de circulation (5).

6. Système d'identification selon l'une quelconque des revendications précédentes **caractérisé en ce que** ledit caisson (9) incorpore un élément de support (34), une pluralité de modules élémentaires (32) métalliques et une pluralité de sources rayonnantes (34) aptes à émettre des ondes radio, les modules élémentaires (32) étant régulièrement répartis sur l'élément de support (30) de sorte à assurer une transmission homogène des ondes radio.

7. Système d'identification selon la revendication 6 **caractérisé en ce que** lesdites sources rayonnantes sont protégées par un capot (44), les ondes se propageant à travers des guides d'ondes (42) en étant orientées en direction des véhicules à contrôler par le plan incliné (41).

8. Système d'identification selon l'une des revendications précédentes, **caractérisé en ce que** ledit caisson (9) est réalisé avec une rigidité telle qu'il peut supporter une pression supérieure à 3 tonnes, générée par le passage d'un véhicule.

9. Système d'identification selon l'une des revendications précédentes, **caractérisé en ce que** ledit caisson (9) est positionné dans la voie (5) de façon à affleurer la couche de surface (5a).

10. Système d'identification selon l'une quelconque des revendications précédentes, **caractérisé en ce que** le module d'émission et de réception (8, 8') comporte une antenne d'activation (8a_{ACT}, 8b_{ACT}) et une antenne de réception (8a_{REC}, 8b_{REC}), l'antenne d'activation (8a_{ACT}, 8b_{ACT}) étant apte à émettre un signal d'activation d'un transpondeur d'identification radiofréquence (4), et l'antenne de réception (8a_{REC,} 8b_{REC}) étant apte à collecter au moins une donnée d'information provenant du transpondeur d'identification radiofréquence (4).

11. Système d'identification selon l'une quelconque des revendications précédentes, **caractérisé en ce que** le module d'émission et de réception (8, 8') comporte un premier module (8a) et un deuxième module (8b) complémentaire du premier module (8a) de sorte à permettre la communication du module d'émission et de réception (8, 8') avec deux badges d'identification (3) positionnés respectivement à l'avant et à l'arrière du véhicule (2).

12. Système d'identification selon l'une quelconque des revendications précédentes, **caractérisé en ce que** la voie de circulation (5) présente une direction de déplacement et est composée d'au moins une première et une deuxième voie de circulation (5), le système d'identification comportant un premier et un deuxième module d'émission (8, 8') positionnés respectivement sur la première et la deuxième voie de circulation (5), le premier module d'émission et de réception (8) étant apte à communiquer avec le badge d'identification (3) de véhicules (2) se déplaçant sur la première voie de circulation (5) et le deuxième module d'émission et de réception (8') étant apte à communiquer avec le badge d'identification (3) de véhicules (2) se déplaçant sur la deuxième voie de circulation (5), dans lequel le deuxième module d'émission et de réception (8') est décalé vis-à-vis du premier module d'émission et de réception (8) dans le sens de déplacement de la zone de circulation (6).

13. Système d'identification selon l'une quelconque des revendications précédentes, **caractérisé en ce que** le badge d'identification (3) est composé d'un transpondeur d'identification radiofréquence (4), d'un réflecteur métallique (22) et d'une couche diélectrique (24), la couche diélectrique (24) formant une couche d'espacement entre le transpondeur radiofréquence (4) et le réflecteur métallique (22).

14. Système d'identification selon la revendication 13, **caractérisé en ce que** la couche diélectrique (24) présente une épaisseur sensiblement inférieure ou égale à 1 centimètre.

15. Système d'identification selon la revendication 13 ou 14, **caractérisé en ce que** le badge d'identification radiofréquence (3) est protégé par un boîtier de protection (20) apte à détruire le transpondeur d'identification radiofréquence (4) en cas d'arrachement.

16. Système d'identification selon l'une quelconque des revendications précédentes, dans lequel le module d'émission et de réception (8) est apte à communiquer avec le badge d'identification (3) dans un domaine normalisé de fréquences comprises entre 5,8 et 5,9 GHz ou 860 et 960 GHz.

## Claims

1. Identification system for collecting data from at least one approaching vehicle (2) running on a traffic lane (5) having a surface layer (5a); the identification system including:
- at least one radiofrequency identification badge (3), provided at any position at the front or the rear of the vehicle,
- at least one transmission and reception module (8, 8') capable of communicating with the identification badge (3) by radio link so as to collect at least one identification data, said module being integrated in the traffic lane (5) so as to read said identification badge, and
- a control housing (14) connected to the transmission and reception module (8, 8') in order to receive and analyse the identification data from the vehicle (2),
**characterised in that** the transmission and reception module (8, 8') is enclosed in a casing (9) and **in that** said module comprises at least one inclined plane (9d, 41) defining a reflector and at least one wave guide.

2. Identification system according to claim 1, **characterised in that** said casing (9) comprises at least one slot (9b, 42) allowing for the propagation of the waves in the direction of the approaching vehicle and an antenna (8a, 9c, 44) constituted of one or several radiating sources, said at least one slot (9b, 42) sealed hermetically.

3. Identification system as claimed in the preceding claim, **characterised in that**, the casing (9) incorporates at least one radiating source (9c, 34) able to transmit radio waves and **in that** said inclined plane (9d) is able to reflect the radio waves coming from said radiating source in the direction of said at least one slot.

4. Identification system according to claim 3, **characterised in that** the slot (9b), the radiating source (9c) and the inclined plane (9d) are arranged in such a way that the distance able to be travelled by a radio wave from the radiating source (9c) and until the slot (5b), after reflecting on the inclined plate (9d), is a multiple of λ/4, λ representing the wavelength of the radio wave.

5. Identification system according to claim 3 or 4, **characterised in that** the slot (9b), the radiating source (9c) and the inclined plane (9d) are arranged in such a way as to form a transmission lobe inclined between 10 and 30 degrees in relation to the upper surface of the traffic lane (5).

6. Identification system as claimed in any preceding claim **characterised in that** said casing (9) incorporates a support element (34), a plurality of metal basic modules (32) and a plurality of radiating sources (34) able to transmit radio waves, the basic modules (32) regularly distributed on the support element (30) in such a way as to provide for a homogeneous transmission of the radio waves.

7. Identification system according to claim 6 **characterised in that** said radiating sources are protected by a cover (44), the waves propagating through wave guides (42) by being orientated in the direction of the vehicles to be controlled by the inclined plane (41).

8. Identification system according to one of the preceding claims, **characterised in that** said casing (9) is carried out with rigidity such that it can support a pressure exceeding 3 tonnes, generated by the passing of a vehicle.

9. Identification system according to one of the preceding claims, **characterised in that** said casing (9) is positioned in the lane (5) in such a way as to be flush with the surface layer (5a) .

10. Identification system as claimed in any preceding claim, **characterised in that** the transmission and reception module (8, 8') comprises an activation antenna (8a_{ACT}, 8b_{ACT}) and a reception antenna (8a_{REC}, 8b_{REC}), the activation antenna (8a_{ACT}, 8b_{ACT}) able to transmit an activation of a radiofrequency identification transponder (4), and the reception antenna (8a_{REC}, Bb_{REC}) able to collect at least one information data coming from the radiofrequency identification transponder (4).

11. Identification system as claimed in any preceding claim, **characterised in that** the transmission and reception module (8, 8') comprises a first module (8a) and a second module (8b) that complements the first module (8a) in such a way as to allow for the communication of the transmission and reception module (8, 8') with two identification badges (3) positioned respectively at the front and at the rear of the vehicle (2).

12. Identification system as claimed in any preceding claim, **characterised in that** the traffic lane (5) has a direction of displacement and is comprised of at least a first and a second traffic lane (5), the identification system comprising a first and a second transmission module (8, 8') positioned respectively on the first and the second traffic lane (5), the first transmission and reception module (8) able to communicate with the identification badge (3) of vehicles (2) running on the first traffic lane (5) and the second transmission and reception module (8') able to communicate with the identification badge (3) of vehicles (2) running on the second traffic lane (5), wherein the second transmission and reception module (8') is offset with regards to the first transmission and reception module (8) in the direction of displacement of the traffic zone (6).

13. Identification system as claimed in any preceding claim, **characterised in that** the identification badge (3) is comprised of a radiofrequency identification transponder (4), of a metal reflector (22) and a dielectric layer (24), the dielectric layer (24) forming a spacing layer between the radiofrequency transponder (4) and the metal reflector (22).

14. Identification system according to claim 13, **characterised in that** the dielectric layer (24) has a thickness that is substantially less than or equal to 1 centimetre.

15. Identification system according to claim 13 or 14, **characterised in that** the radiofrequency identification badge (3) is protected by a protective housing (20) able to destroy the radiofrequency identification transponder (4) in the event it is pulled off.

16. Identification system as claimed in any preceding claim, wherein the transmission and reception module (8) is able to communicate with the identification badge (3) in a standardised range of frequencies between 5.8 and 5.9 GHz or 860 and 960 GHz.

## Patentansprüche

1. Identifizierungssystem für die Datensammlung von mindestens einem sich annähernden Fahrzeug (2), das sich auf einem Fahrstreifen (5) fortbewegt, der eine Oberflächenschicht (5a) aufweist; das Identifizierungssystem umfasst:
- mindestens einen Radiofrequenz-Identifizierungschip (3), der an irgendeiner Stelle vorne oder hinten am Fahrzeug angebracht ist,
- mindestens ein Sende- und Empfangsmodul (8, 8'), das in der Lage ist, über eine Funkverbindung mit dem Identifizierungschip (3) zu kommunizieren, um mindestens ein Identifizierungsdatum zu sammeln, wobei das Modul im Fahrstreifen (5) integriert ist, sodass es den besagten Identifizierungschip ablesen kann, und
- ein Steuergerät (14), das mit dem Sende- und Empfangsmodul (8, 8') verbunden ist, um die Identifizierungsdaten aus dem Fahrzeug (2) zu empfangen und zu analysieren,
**dadurch gekennzeichnet, dass** das Sende- und Empfangsmodul (8, 8') in einen Kasten (9) eingeschlossen ist, und dadurch, dass das besagte Modul zumindest eine schiefe Ebene (9d, 41) umfasst, die einen Reflektor bildet, sowie zumindest eine Wellenführung.

2. Identifizierungssystem nach Anspruch 1, **dadurch gekennzeichnet, dass** der besagte Kasten (9) zumindest einen Schlitz (9b, 42) umfasst, durch den sich die Wellen in Richtung des sich annähernden Fahrzeugs und einer Antenne (8a, 9c, 44) ausbreiten können, die aus einer oder aus mehreren Strahlungsquellen gebildet wird, und der besagte zumindest eine Schlitz (9b, 42) hermetisch verschlossen ist.

3. Identifizierungssystem nach dem vorherigen Anspruch, **dadurch gekennzeichnet, dass** der Kasten (9) zumindest eine Strahlungsquelle (9c, 34) enthält, die in der Lage ist, Funkwellen auszusenden, und dadurch, dass die besagte schiefe Ebene (9d) in der Lage ist, die Funkwellen aus der besagten Strahlungsquelle in Richtung des besagten zumindest einen Schlitzes (9b, 42) abzustrahlen.

4. Identifizierungssystem nach Anspruch 3, **dadurch gekennzeichnet, dass** der Schlitz (9b), die Strahlungsquelle (9c) und die schiefe Ebene (9d) so angeordnet sind, dass die Distanz, die von einer Funkwelle nach der Abstrahlung von der schiefen Ebene (9d) von der Strahlungsquelle (9c) bis zum Schlitz (9b) zurückgelegt werden soll, ein Vielfaches von λ/4 ist, wobei λ die Wellenlänge der Funkwelle darstellt.

5. Identifizierungssystem nach Anspruch 3 oder 4, **dadurch gekennzeichnet, dass** der Schlitz (9b), die Strahlungsquelle (9c) und die schiefe Ebene (9d) so angeordnet sind, dass sie eine Sendekeule bilden, die im Verhältnis zur Oberfläche des Fahrstreifens (5) um 10 bis 30 Grad geneigt ist.

6. Identifizierungssystem nach irgendeinem der vorherigen Ansprüche, **dadurch gekennzeichnet, dass** der besagte Kasten (9) ein Halteelement (34), eine Vielzahl von metallischen Elementarmodulen (32) und eine Vielzahl von Strahlungsquellen (34) enthält, die in der Lage sind, Funkwellen auszusenden, wobei die Elementarmodule (32) gleichförmig auf dem Halteelement (30) verteilt sind, um für eine gleichförmige Übertragung der Funkwellen zu sorgen.

7. Identifizierungssystem nach Anspruch 6, **dadurch gekennzeichnet, dass** die besagten Strahlungsquellen durch eine Verkleidung (44) geschützt sind, und sich die Wellen durch die Wellenführungen (42) ausbreiten, indem sie durch die schiefe Ebene (41) auf die zu kontrollierenden Fahrzeuge gerichtet werden.

8. Identifizierungssystem nach einem der vorherigen Ansprüche, **dadurch gekennzeichnet, dass** der besagte Kasten (9) mit einer solchen Steifigkeit ausgeführt ist, dass er einen Druck von über 3 Tonnen aushalten kann, der durch ein vorbeifahrendes Fahrzeug generiert wird.

9. Identifizierungssystem nach einem der vorherigen Ansprüche, **dadurch gekennzeichnet, dass** der besagte Kasten (9) so im Fahrstreifen (5) positioniert ist, dass er die Oberflächenschicht (5a) leicht berührt.

10. Identifizierungssystem nach irgendeinem der vorherigen Ansprüche, **dadurch gekennzeichnet, dass** das Sende- und Empfangsmodul (8, 8 `) eine Aktivierungsantenne (8a_{ACT}, 8b_{ACT}) und eine Empfangsantenne (8a_{REC}, 8b_{REC}) umfasst, wobei die Aktivierungsantenne (8a_{ACT}, 8b_{ACT}) in der Lage ist, ein Signal zur Aktivierung eines Radiofrequenz-Identifizierungstransponders (4) auszusenden, und die Empfangsantenne (8a_{REC}, 8b_{REC}) in der Lage ist, zumindest ein Informationsdatum zu sammeln, das aus dem Radiofrequenz - Identifizierungstransponder (4) stammt.

11. Identifizierungssystem nach irgendeinem der vorherigen Ansprüche, **dadurch gekennzeichnet, dass** das Sende- und Empfangsmodul (8, 8') ein erstes Modul (8a) und ein zweites Modul (8b) umfasst, das das erste Modul (8a) ergänzt, um die Kommunikation des Sende- und Empfangsmoduls (8, 8 ') mit zwei Identifizierungschips (3) zu ermöglichen, die jeweils vorne und hinten am Fahrzeug (2) angebracht sind.

12. Identifizierungssystem nach irgendeinem der vorherigen Ansprüche, **dadurch gekennzeichnet, dass** der Fahrstreifen (5) eine Fahrtrichtung aufweist, und sich aus zumindest einem ersten und einem zweiten Fahrstreifen (5) zusammensetzt, und das Identifizierungssystem ein erstes und ein zweites Emissionsmodul (8, 8`) umfasst, die jeweils auf dem ersten und dem zweiten Fahrstreifen (5) angeordnet sind, und das erste Sende- und Empfangsmodul (8) in der Lage ist, mit dem Identifizierungschip (3) von Fahrzeugen (2) zu kommunizieren, die sich auf dem ersten Fahrstreifen (5) fortbewegen, und das zweite Sende- und Empfangsmodul (8') in der Lage ist, mit dem Identifizierungschip (3) von Fahrzeugen (2) zu kommunizieren, die sich auf dem zweiten Fahrstreifen (5) fortbewegen, wobei das zweite Sende- und Empfangsmodul (8`) in der Fortbewegungsrichtung der Verkehrszone (6) gegenüber dem ersten Sende- und Empfangsmodul (8) versetzt angeordnet ist.

13. Identifizierungssystem nach irgendeinem der vorherigen Ansprüche, **dadurch gekennzeichnet, dass** sich der Identifizierungschip (3) aus einem Radiofrequenz-Identifizierungstransponder (4), einem metallischen Reflektor (22) und einer dielektrischen Schicht (24) zusammensetzt, und die dielektrische Schicht (24) eine Abstandsschicht zwischen dem Radiofrequenztransponder (4) und dem metallischen Reflektor (22) bildet.

14. Identifizierungssystem nach Anspruch 13, **dadurch gekennzeichnet, dass** die dielektrische Schicht (24) eine Stärke in etwa kleiner oder gleich 1 Zentimeter aufweist.

15. Identifizierungssystem nach Anspruch 13 oder 14, **dadurch gekennzeichnet, dass** der Identifizierungschip (3) durch ein Schutzgehäuse (20) geschützt wird, das in der Lage ist, den Radiofrequenz-Identifizierungstransponder (4) zu zerstören, falls dieser herausgerissen wird.

16. Identifizierungssystem nach irgendeinem der vorherigen Ansprüche, bei dem das Sende- und Empfangsmodul (8) in der Lage ist, in einem genormten Frequenzbereich zwischen 5,8 und 5,9 GHz oder 860 und 960 GHz mit dem Identifizierungschip (3) zu kommunizieren.
